## Europäisches Patentamt

## European Patent Office

## Office européen des brevets

(19)

(11) Veröffentlichungsnummer: **0 064 219**
**B1**

(12)

# EUROPÄISCHE PATENTSCHRIFT

(45) Veröffentlichungstag der Patentschrift:
23.10.85

(21) Anmeldenummer: 82103355.2

(22) Anmeldetag: 21.04.82

(51) Int. Cl.⁴: **B 29 C 59/10**, B 32 B 31/12, C 08 J 5/12

(54) Verfahren zum Kaschieren von mindestens zwei Werkstoffbahnen.

(30) Priorität: 01.05.81 PC /EP81/000 36

(43) Veröffentlichungstag der Anmeldung:
10.11.82 Patentblatt 82/45

(45) Bekanntmachung des Hinweises auf die Patenterteilung:
23.10.85 Patentblatt 85/43

(84) Benannte Vertragsstaaten:
AT BE CH DE FR GB IT LI NL SE

(56) Entgegenhaltungen:
DE - A - 1 222 649
DE - A - 2 362 267
DE - A - 2 446 414
US - A - 3 329 549
US - A - 3 477 902
US - A - 3 647 592
US - A - 3 823 061

(73) Patentinhaber: Erwin Kampf GmbH & Co.
Maschinenfabrik, Mühlener Strasse 36, D-5276 Wiehl-2,
Mühlen (DE)
Patentinhaber: SOFTAL electronic GmbH,
Friedrich-Ebert-Damm 202a, D-2000 Hamburg 70 (DE)

(72) Erfinder: Kuhlmann, Heinz, Mühlenfeldstrasse 24,
D-5276 Wiehl-2, Mühlen (DE)
Erfinder: Prinz, Eckhard, Hovestrasse 65,
D-2000 Hamburg 28 (DE)

(74) Vertreter: von Raffay, Vincenz, Dipl.-Ing., Patentanwälte
Raffay, Fleck & Partner Postfach 32 32 17,
D-2000 Hamburg 13 (DE)

## Beschreibung

Die Erfindung betrifft ein Verfahren zum Kaschieren von mindestens zwei Werkstoffbahnen wie Kunststoff-Folien, Metall-Folien und -Bändern, Papier, Gewebe, bei dem die Werkstoffbahnen mit elektrischer Entladung behandelt werden.

Bei einem bekannten Verfahren der eingangs genannten Art ist die elektrische Behandlung eine sogenannte Koronaentladung, die bei atmosphärischem Druck stattfindet. Die miteinander zu verbindenden oder zu kaschierenden Werkstoffbahnen, die unterschiedliche Eigenschaften aufweisen, d. h. nicht miteinander »verträglich« sind, werden nach diesem bekannten Verfahren dadurch miteinander verbunden, daß die gemeinsame Koronabehandlung vor der Berührung der zu verbindenden Bahnen beginnt und sich bis zu einer Stelle erstreckt, an der die Bahnen aneinander anliegen (DE-A-2 446 414).

Bei einem anderen bekannten Verfahren werden Folien aus unterschiedlichen Materialien einem »gas discharge plasma« ausgesetzt, um sie miteinander zu verbinden. Auch dieses Verfahren arbeitet grundsätzlich unter atmosphärischem Druck und vorzugsweise mit etwas höherem Druck. Die zu verbindenden Folien aus unterschiedlichen Materialien werden gemeinsam behandelt, d. h. die Behandlung kann immer nur mit Rücksicht auf die »schwächere« Folie erfolgen. Ziel dieser bekannten Behandlung ist vielmehr die Haftverbesserung von Polymermaterial zu einem Resorcinol-Formaldehyd/Latex-Gemisch, das als Haftvermittler zwischen Polymermaterial und Gummi dient (US-A-3 959 567).

Zur Behandlung einer einzelnen Folie ist es auch schon bekannt geworden, diese im niederenergetischen Bereich unter Vakuum zu behandeln. Bei diesen bekannten Verfahren wurde aber immer nur eine Folie oder Bahn in der entsprechenden Vorrichtung behandelt. Eine unmittelbare Verbindung mit einer anderen gleichzeitig behandelten Folie erfolgt nicht (US-A-3 477 902).

Der Erfindung liegt nun die Aufgabe zugrunde, ein Verfahren der eingangs genannten Art zu schaffen, durch das Werkstoffbahnen unterschiedlicher Eigenschaften, d. h. aus den unterschiedlichsten Materialien, in reproduzierbarer Weise und mit hoher Haftfestigkeit, klebstofffrei miteinander verbunden werden. Insbesondere soll die Verbindung so erfolgen, daß eine stoffschlüssige Verbindung zwischen den Bahnoberflächen entsteht, deren Kohäsionsfestigkeit derjenigen des schwächeren Verbundpartners entspricht.

Diese Aufgabe wird durch die Gesamtheit der Merkmale des Patentanspruches 1 gelöst.

Dadurch, daß erfindungsgemäß eine Behandlung in dem angegebenen Energiebereich unter Vakuum stattfindet, und insbesondere jede Folie für sich, d. h. nach ihren Eigenschaften einzeln und individuell behandelt wird, ist es möglich, die Aufgabe zu lösen, d. h. eine Verbindung herzustellen, die der Kohäsionsfestigkeit des schwächeren Verbundpartners entspricht. Die hierdurch entstehende Verbindung ist so gut, wie sie theoretisch sein kann und praktisch nur durch Zerstörung einer Folie wieder zu lösen. Hierdurch eröffnen sich vollständig neue Anwendungsgebiete.

Vorteilhafte Ausgestaltungen sind Gegenstand der Ansprüche 2 bis 6.

Ausführungsformen der Erfindung werden im folgenden unter Bezugnahme auf die anliegenden Zeichnungen erläutert, in denen darstellen:

Fig. 1 eine erste Ausführungsform einer Vorrichtung nach der Erfindung, und zwar für einen chargenweisen Betrieb und

Fig. 2 eine zweite Ausführungsform der Erfindung für einen kontinuierlichen Betrieb.

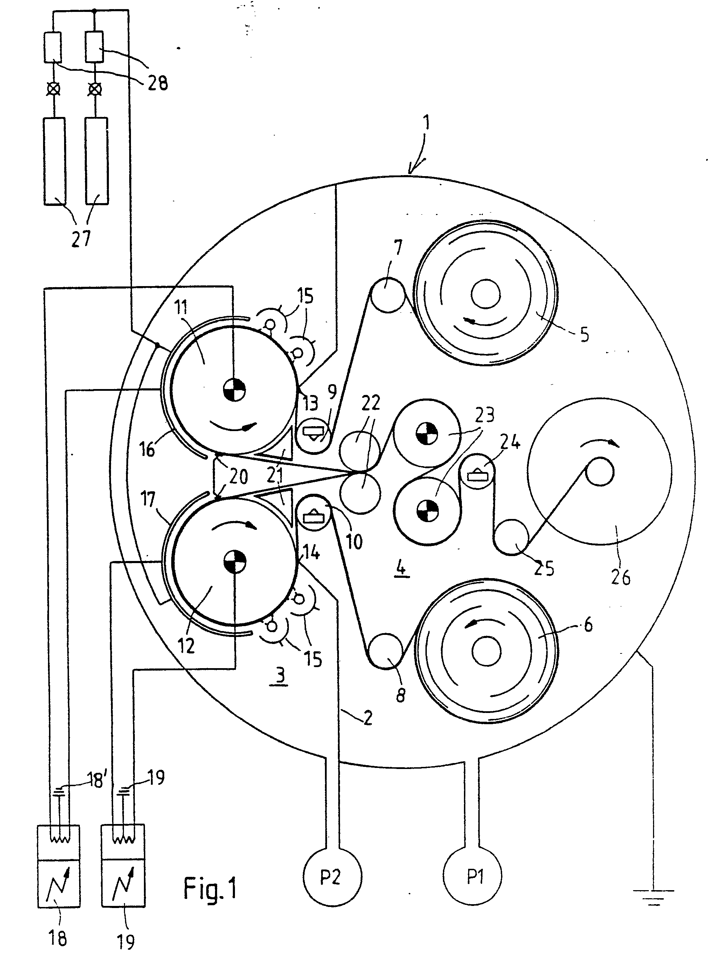

Die Vorrichtung nach Fig. 1 ist für einen chargenweisen oder diskontinuierlichen Betrieb vorgesehen. Die gesamte Behandlung erfolgt innerhalb einer Vakuumkammer 1, die mit Vakuumpumpen P1 und P2 verbunden ist. Die Vakuumkammer ist vorzugsweise aus Stahl gefertigt. Sie ist mit Türen versehen, die eine Beschickung ermöglichen. Die Kammer läßt sich mit Hilfe der Vakuumpumpen P1 und P2 auf einen Enddruck im Bereich von 0,01 bis 200 mbar evakuieren. Eine Trennwand 2 kann den Entladungsbehandlungsraum 3 von dem Kaschierraum 4 abteilen. Innerhalb des Kaschierraumes kann ein höherer Druck herrschen, so daß die Vakuumpumpe P1 nur eine geringere Leistungsfähigkeit aufweisen muß. Innerhalb des Kaschierraumes sind zwei Abwicklungen 5 und 6 angeordnet. Ferner sind Führungswalzen 7 und 8 sowie Zugmeßwalzen oder Tänzerwalzen 9 und 10 vorhanden.

Innerhalb des Entladungsbehandlungsraumes 3 sind Rollenelektroden 11 und 12 gelagert, die von den Werkstoffbahnen umschlungen sind. Zwischen den Rändern der Trennwand 2 und der Rollenelektroden 11 bzw. 12 bleibt jeweils ein Einführungsspalt 13, 14 als Schleuse zur Einführung einer Werkstoffbahn frei. Die Rollenelektroden 11 und 12 weisen in Abhängigkeit vom Gasdruck unterschiedliche Oberflächenbeschichtungen aus einem Dielektrikum auf. Das Dielektrikum ist eine homogene, porenfreie Beschichtung aus Siliconkautschuk, glasfaserverstärktem Kunststoff, Polyester, plasmagespritzter Keramik, Emaille oder dergleichen. Die Schichtdicke kann bis zu 20 mm betragen. Im Anschluß an den Einführungsspalt 13 bzw. 14 können der Oberfläche der jeweiligen Rollenelektrode 11 bzw. 12 gegenüberstehend Wärmestrahler 15 angeordnet sein. Die Rollenelektroden 11, 12 sind temperierbar ausgebildet.

Einem größeren Umfangsbogen der Rollenelektroden 11 bzw. 12 stehen Gegenelektroden 16 bzw. 17 gegenüber. Die Rollenelektroden 11 bzw. 12 und die Gegenelektroden 16 bzw. 17 sind jeweils an einen Hochfrequenzgenerator 18 bzw. 19 angeschlossen. Dessen Ausgangswicklung besitzt im Ausführungsbeispiel eine Mittenerdung 18' bzw. 19', so daß die Elektroden gegenüber dem Gehäuse nur die halbe Generatorausgangsspannung haben. Dieses erleichtert die Isolation der Innenwände des Entladungsbehandlungsraumes. Die Flächenelektroden 16 und 17 sind beim Ausführungsbeispiel aus Edelstahl gefertigt und in ihrer Größe so ausgelegt, daß eine Strombelastung von 20 mA/cm² nicht überschritten wird, bei einer maximalen Elektrodenleistung von 10 kW/m Elektrodenbreite. Diese Werte gelten auch für die Dimensionierung der Trägerwalzen. Der Abstand zwischen Elektrode und Trägerwalze kann bis zu 200 mm betragen.

Der Hochfrequenzgenerator ist ein stromgeprägter Typ mit einer Entladungsfrequenz im Bereich von 1 bis 500 kHz. Die zur Entladung aufrechterhaltene Spannung liegt zwischen 10 und 5000 Volt. Der Ausgangstransformator ist symmetrisch aufgebaut, wobei die Mittenanzapfung an Gehäusemasse liegt. Dadurch haben Gegenelektrode und Rollenelektrode die volle Spannung gegeneinander, aber nur halbe Spannung gegen das Gehäuse. Dadurch wird ein Ladungsabfluß, also ein Energieverlust, vom Elektrodensystem zum Gehäuse unterdrückt. Die Generatorleistung wird so ausgewählt, daß sie in Korrelation mit Bahngeschwindigkeit und Bahnbreite eine spezifische Behandlungsenergie im Bereich von 10 mWs/cm² bis 10 Ws/cm² ergibt. Zur Vermeidung von Produktionsausschuß werden die vorgewählten Daten durch Regelung der Leistung proportional zur Geschwindigkeit konstant gehalten.

Das gesamte Entladungssystem, insbesondere aber alle spannungsführenden Teile, sind gegen das Gehäuse isoliert und auf Abstand montiert. Bei Bedarf werden Teile des Gehäuses bzw. an Gehäusemasse liegende Bahnführungselemente mit dielektrischen Materialien beschichtet oder aus dielektrischen Materialien gefertigt, um das unerwünschte Abfließen von Entladungsenergie zu unterdrücken.

Auch die Flächenelektroden 16 und 17 können temperierbar sein. Das Entladungssystem kann z. B. durch umlaufendes Wärmeträgeröl in der Temperatur gesteuert sein. Die Oberflächentemperaturen der Rollenelektroden und sonstigen Elektrode können im Bereich von 250 bis 600 K gewählt werden. Die Strahler 15 dienen zur unmittelbaren Erwärmung der Werkstoffbahnen.

Der jeweils auf eine Rollenelektrode auflaufende Bahnabschnitt und der ablaufende Bahnabschnitt bilden mit der Umfangsfläche der Rollenelektrode einen etwa dreieckigen Hohlraum. Damit in diesem Hohlraum keine Glimmentladung auftritt und dadurch nicht die Rückseite der Werkstoffbahn behandelt wird, ist in diesem Hohlraum jeweils ein Verdrängerkörper 21 angeordnet. Der Verdrängerkörper besteht aus dielektrischem Material und füllt den Hohlraum im wesentlichen konturentreu aus. Der Abstand gegenüber den Oberflächen und den Werkstoffbahnen soll an keiner Stelle 10 mm überschreiten.

Im Anschluß an die Entladungsstrecke treten die Werkstoffbahnen durch Spalte 20 aus dem Entladungsbehandlungsraum 3 aus.

Innerhalb des Kaschierraumes schließen sich Kaschierwalzen 22 an, die temperierbar sind und die mit gesteuertem Druck gegeneinander gepreßt werden können. Zur Bahnführung sind Kühlwalzen 23, eine Tänzerwalze 24 und weitere Umlenkwalzen 25 vorgesehen. Ferner ist eine Aufwicklung 26 vorhanden.

Die Temperatur der Kaschierwalzen kann zwischen 250 und 600 K eingestellt werden, der Druck zwischen 1 und 1000 N/cm.

Schließlich können Gasreservoire 27 mit jeweiligen Einleitungsvorrichtungen 28 vorhanden sein. Diese Anordnung ermöglicht die Einleitung von Gas und/oder Dampf insbesondere in den Entladungsraum. Es kann sich dabei um ein Gas wie Stickstoff, Sauerstoff, Kohlendioxid, Ethylen, Aceton oder auch ein Trägergas-Dampf-Gemisch handeln. Vorzugsweise wird dieses Gas der Flächenelektrode zugeführt und durch Düsen direkt in den Entladungsspalt geblasen. Es ist auch möglich, für beide Bahnen unterschiedliche Gase zu verwenden. Eine weitere Variante besteht darin, die Gase direkt vor der Kaschierstation zwischen die zusammenlaufenden Bahnen zu blasen.

Die Arbeitsweise der beschriebenen Vorrichtung nach Fig. 1 ergibt sich ohne nähere Erläuterungen. Die Bahnaufwicklung und Bahnabwicklung können auch in Vakuumschleusen angeordnet sein, die gesondert von der Vakuumkammer 1 abtrennbar sind. In diesem Fall ist ein Rollenwechsel möglich, ohne innerhalb der gesamten Vakuumkammer das Vakuum aufzuheben.

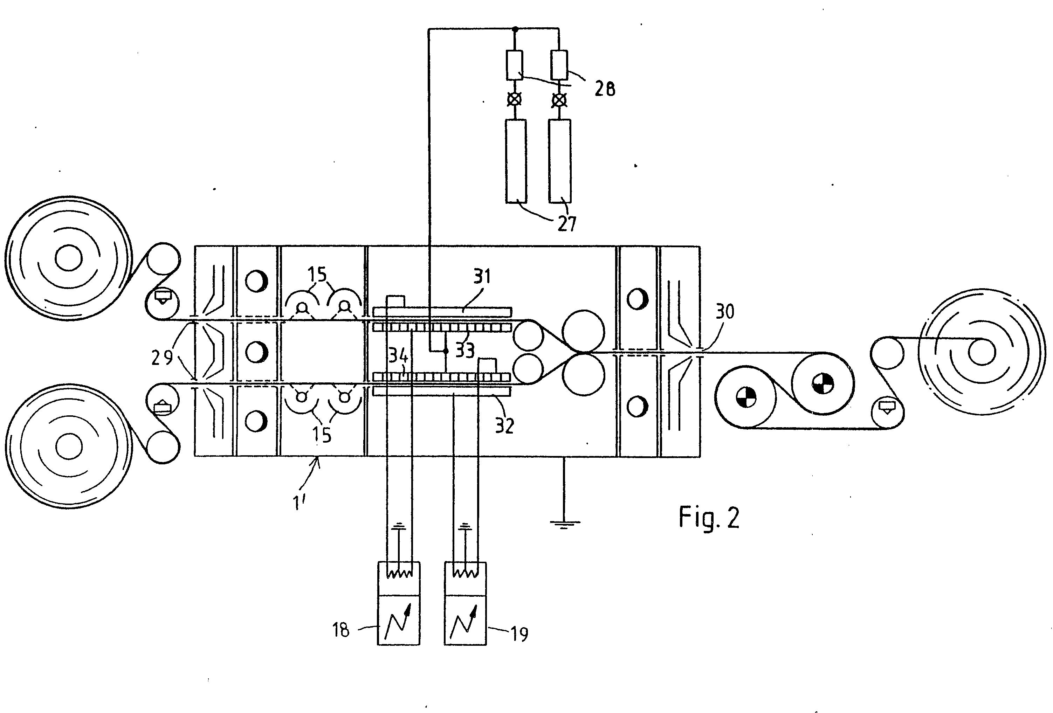

Eine Ausführungsform der Erfindung nach Fig. 2 zeigt eine Vakuumkammer 1', die im Durchlaufverfahren betrieben wird. Die Werkstoffbahnen werden jeweils über Vakuumschleusen 29 in die Vakuumkammer 1' eingeführt. Die Verbundfolie wird über eine Vakuumschleuse 30 ausgeleitet. Im übrigen entspricht der Aufbau dieser Vorrichtung der zuvor beschriebenen Vorrichtung. Die Elektrodensysteme für die beiden Werkstoffbahnen sind als ebene Elektrodensysteme ausgebildet. Es ist jeweils eine Bezugselektrode 31, 32 sowie eine Gegenelektrode 33, 34 vorhanden. Die Bezugselektroden haben einen geringen Abstand zur Werkstoffbahn und stehen derjenigen Bahnoberfläche gegenüber, die nicht aktiviert werden soll. Die Elektroden 33 und 34 haben dagegen einen so großen Abstand zu der Bahnoberfläche, daß die zur Aktivierung erforderliche Gasentladung zwischen der Elektrode 33 bzw. 34 in der Oberfläche der Werkstoffbahn gezündet werden kann.

Durchgeführte Versuche haben den technischen Effekt des beanspruchten Verfahrens bestätigt. Einige Meßwerte sind in der nachstehenden Tabelle angegeben.

3

| Laminat | Al-LDPE | AL-PP | PPO-LDPE | PA-LDPE |
|---|---|---|---|---|
| Gasdruck, mbar | 0,5 | 0,2 | 0,8 | 1,0 |
| Arbeitsbreite, mm | 300 | 300 | 500 | 500 |
| Geschwindigkeit, m/min | 30 | 30 | 60 | 60 |
| Trägerwalzentemperatur, K | 353 | 353 | 333 | 333 |
| Elektrode, mm | $300 \times 100$ | $300 \times 100$ | $500 \times 250$ | $500 \times 250$ |
| Elektrodenabstand, mm | 15 | 15 | 25 | 25 |
| Spez. Energie, mWS/cm$^2$ | 400/300 | 400/1200 | 300/130 | 260/80 |
| Frequenz, kHz | 28 | 28 | 24 | 24 |
| Dielektrikumdicke, mm | 0/0,8 | 0/0,8 | 0,8 | 0,8 |
| Kaschierwalzentemperatur, K | 388 | 403 | 380 | 380 |
| Kaschierdruck, N/cm | 20 | 20 | 15 | 15 |
| Haftung trocken | nicht trennbar | nicht trennbar | nicht trennbar | nicht trennbar |

Al = Aluminium, LDPE = Polyethylen geringer Dichte, PP = Polypropylen, PPO = orientiertes Polypropylen, PA = Polyamid.

## Patentansprüche

1. Verfahren zum Kaschieren von mindestens zwei Werkstoffbahnen wie Kunststoff-Folien, Metall-Folien und -Bändern, Papier, Gewebe, bei dem die Werkstoffbahnen mit elektrischer Entladung behandelt werden, wobei die Behandlung der Werkstoffbahnen einzeln und individuell mit einer niederenergetischen Entladung in einer der Werkstoffart angepaßten Gas- oder Dampfatmosphäre in Vakuum von $10^{-2}$ bis $2 \cdot 10^2$ mbar durchgeführt wird und die miteinander zu verbindenden Bahnoberflächen individuell in Abhängigkeit von der Werkstoffart mit einer Energiedichte von 10 bis $10^4$ mWs/cm$^2$ aktiviert und danach in Linie ausschließlich unter Druck und Wärmezufuhr verbunden werden.

2. Verfahren nach Anspruch 1, dadurch gekennzeichnet, daß die Werkstoffbahnen im Anschluß an die Aktivierung im Vakuum zusammengeführt werden.

3. Verfahren nach Anspruch 1, dadurch gekennzeichnet, daß die Werkstoffbahnen im Anschluß an die Aktivierung außerhalb des Vakuums unter atmosphärischem Druck zusammengeführt werden.

4. Verfahren nach Anspruch 1, dadurch gekennzeichnet, daß die niederenergetische Entladung erzeugenden Elektroden temperiert werden.

5. Verfahren nach einem der Ansprüche 1 bis 3, dadurch gekennzeichnet, daß die die niederenergetische Entladung erzeugenden Elektroden zum Unterdrücken eines Ladungsabflusses zum Gehäuse gegenüber Masse auf halbem Potential geschaltet werden.

6. Verfahren nach einem der Ansprüche 1 bis 3 unter Verwendung von Rollenelektroden, dadurch gekennzeichnet, daß der jeweilige Raum, der durch die ab- und zulaufende Bahn und die Rollenoberfläche gebildet wird, zur Vermeidung unerwünschter Rückseitenbehandlung durch einen Verdrängerkörper aus dielektrischem Material ausgefüllt wird.

0 064 219

## Claims

1. Method for laminating at least two foils such as plastic foils, metal foils and ribbons, paper or fabric, the foils being treated with an electrical discharge, whereby the foils are treated separately and individually with a low energy discharge in a suitable gas or vapor atmosphere in vacuo of $10^{-2}$ to $2 \cdot 10^2$ mbar and the surfaces of the foils to be bonded individually depending on the kind of material are activated with an energy density of 10 to $10^4$ mWs/cm$^2$ and then bonded in-line and exclusively under pressure and by application or application of heat.

2. Method according to claim 1, characterized in that, subsequent to the activation, the foils are brought into contact with each other in vacuo.

3. Method according to claim 1, characterized in that, subsequent to the activation, the foils are brought into contact with each other outside the vacuum and under atmospheric pressure.

4. Method according to claim 1, characterized in that, the electrodes producing the low energy discharge are heated.

5. Method according to one of the claims 1 to 3, characterized in that the electrodes producing the low energy discharge are in relation to ground on half the discharge voltage to suppress the charge flow to the housing.

6. Method to one of the claims 1 to 3, using roller electrodes, characterized in that the respective space define by the foils and the roller surface is occupied by a displacement body made of dielectric material to avoid undesired treatment of the backside.

## Revendications

1. Procédé pour laminer au moins deux feuilles continues de matière telles que des feuilles de matière plastique, des feuilles et bandes de métal, du papier, du tissu, selon lequel les feuilles continues de matière sont traitées par décharge électrique, le traitement des feuilles continues de matière étant réalisé séparément et individuellement avec une décharge de faible énergie dans une atmosphère vaporeuse ou gazeuse sous vide de $10^{-2}$ à $2 \cdot 10^2$ mbar adaptée au type de la matière, les surfaces des feuilles devant être assemblées étant activées individuellement en fonction du type de la matière avec une densité de flux d'énergie de 10 à $10^4$ mWs/cm$^2$ et étant ensuite assemblées en ligne droite uniquement par pression et adduction de chaleur.

2. Procédé selon la revendication 1, caractérisé en ce que les feuilles continues de matière, après avoir subi le traitement d'activation, sont réunies sous vide.

3. Procédé selon la revendication 1, caractérisé en ce que les feuilles continues de matière, après avoir subi le traitement d'activation, sont réunies sous pression atmosphérique en dehors du vide.

4. Procédé selon la revendication 1, caractérisé en ce que les électrodes engendrant la décharge de faible énergie sont tempérées.

5. Procédé selon l'une des revendications 1 à 3, caractérisé en ce que les électrodes engendrant la décharge de faible énergie sont montées sur la moitié du potentiel par rapport à la masse pour éviter une perte de charge vers le bâti.

6. Procédé selon l'une des revendications 1 à 3, qui utilise des électrodes à rouleau, caractérisé en ce que la chambre qui est respectivement formée par la feuille continue s'enroulant et se déroulant et la surface du rouleau est remplie par un corps de substitution en matériau diélectrique pour éviter le traitement non désiré du dos de la feuille.

5

Fig.1

Fig. 2

0 064 219